Europäisches Patentamt

(19) **European Patent Office**

**Office européen des brevets**

(11) Publication number: **0 020 411**

**B1**

(12) **EUROPEAN PATENT SPECIFICATION**

(45) Date of publication of patent specification: **27.07.83**

(21) Application number: **79901145.7**

(22) Date of filing: **06.09.79**

(86) International application number:
**PCT/SE79/00180**

(87) International publication number:
**WO 80/00559 03.04.80 Gazette 80/7**

(51) Int. Cl.³: **B 65 G 33/02,**
**B 65 G 43/08, B 65 G 47/64**
**//B61B13/12**

(54) **PRODUCT CARRIER TRANSPORT SYSTEM.**

(30) Priority: **11.09.78 SE 7809543**
**21.12.78 SE 7813208**

(43) Date of publication of application:
**07.01.81 Bulletin 81/1**

(45) Publication of the grant of the patent:
**27.07.83 Bulletin 83/30**

(84) Designated Contracting States:
**AT CH DE FR GB LU NL**

(56) References cited:
**GB - A - 130 889**
**SE - B - 300 443**
**US - A - 3 866 538**

(73) Proprietor: **AB KNIGHT KONSULTERANDE**
**INGENJÖRER**
**Stora Gatan 36**
**S-722 12 Västeras (SE)**

(72) Inventor: **EDENÄS, Bernt Harald**
**Byalagsgatan 10**
**S-725 90 Västeras (SE)**
Inventor: **GARDENBORG, John Evald**
**Svalörtsgatan 9**
**S-722 25 Västeras (SE)**

(74) Representative: **Billingson, Sven et al,**
**Bergenstrahle & Lindvall AB Svartensgatan 6**
**S-116 20 Stockholm (SE)**

Courier Press, Leamington Spa, England.

Product carrier transport system

Systems for the transport and storage of product carriers are previously known which comprise a plurality of elongated transport units adapted to be interconnected to form a transport network, each of said transport units comprising a frame and an elongated transporting screw, driving means for rotating said transporting screws, the threads of which being adapted to cooperate with engagement members provided at the bottom of a product carrier in such a manner that the product carrier, when the screw is driven, is caused to move along the transport unit. A system of this general type is shown in the Swedish patent specification SE—B—300 443.

At joints in the transport network of known systems the product carrier must be turned, e.g. on a rotatable platform, or moved in other ways in order to be brought into a position for engagement with the transporting screw of any selected transport unit out of a plurality of adjoining transport units, and this requires the provision of rather complicated mechanisms.

In certain systems the transport route is selected in response to data with which the product carrier has been provided. Means may be provided for mechanical, electrical or contact free sensing of said destination data and for controlling the transport means of the system in response hereof, so that the product is directed to its destination. It is known in such systems to provide means for delivering information that the product has arrived at the intended destination. However, such systems, which may operate according to various principles, do not in a simple manner allow a permanent and exact information of where in the system the product carrier is momentarily located during the transport process and, therefore, they do not allow re-direction of the product in an arbitrary moment to a changed destination or to a parking position when required. The known arrangements do not therefore allow occasional interferences in the transport work in a simple manner in order to give e.g., priority to a certain product type for an urgent order or to perform the necessary changed dispositions upon damage or the like.

The main object of the present invention is to provide a transport system, in which the disadvantages mentioned above are removed.

Another object of the invention is to provide a transport system, which is particularly adapted for control, monitoring and programming by means of modern electronic equipment.

A further object of the invention is to provide a transport system, which is particularly adapted to be assembled from modules for the adaption to any particular use, whereby the manufacture of the components of system is rendered simpler and more economic.

Still another object of the invention is to provide a transport system, in which a product or a product carrier can be easily removed manually from the transport lines and again replaced thereon without the transport of other products in the system being disturbed.

Other objects and advantages of the invention will appear from the following description and the accompanying drawings.

A system according to the present invention comprises a plurality of elongated transport units adapted to be interconnected to form a transport network, each of said transport units comprising a frame and a elongated transporting screw, driving means for rotating said transporting screws, the threads of which being adapted to cooperate with engagement members provided at the bottom of a product carrier in such a manner that the product carrier, when the screw is driven, is caused to move along the transport unit, and is characterized by at least two transporting screws extending to a junction, a product carrier provided with two engagement members spaced from one another in the direction of travel and each meshing with the thread of the respective transporting screw during transport, the predetermined angular position of the transporting screw being such that, at the junction the engagement members of the product carrier do not mesh with the thread of any transporting screw in the stopped position, but mesh with the thread of any transporting screw when started, in order that the product carrier may be moved away from the junction by a transporting screw other than the one by which it was moved to the junction. Additional features of selected embodiments of the system are stated in the subclaims.

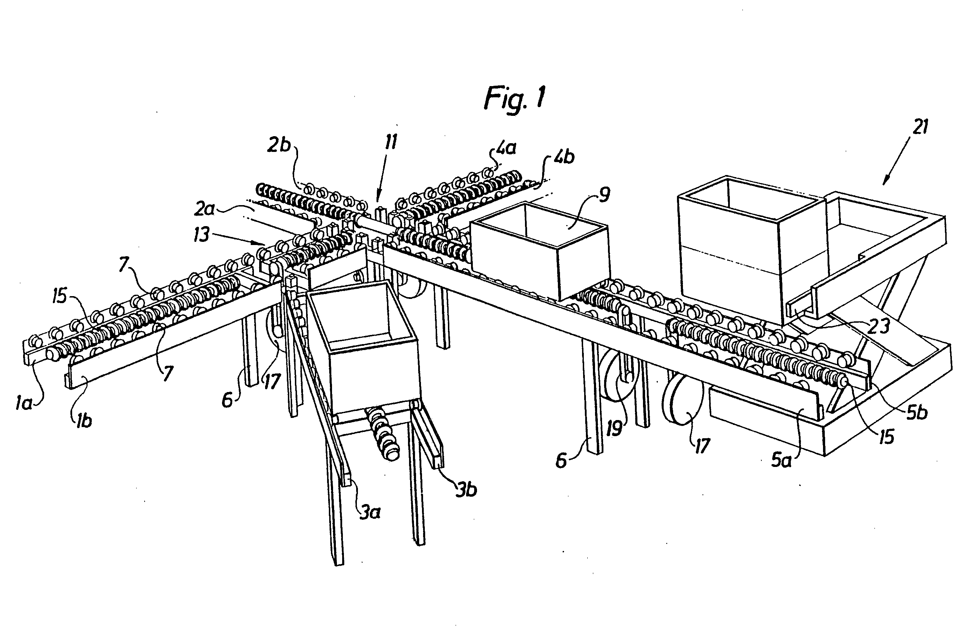

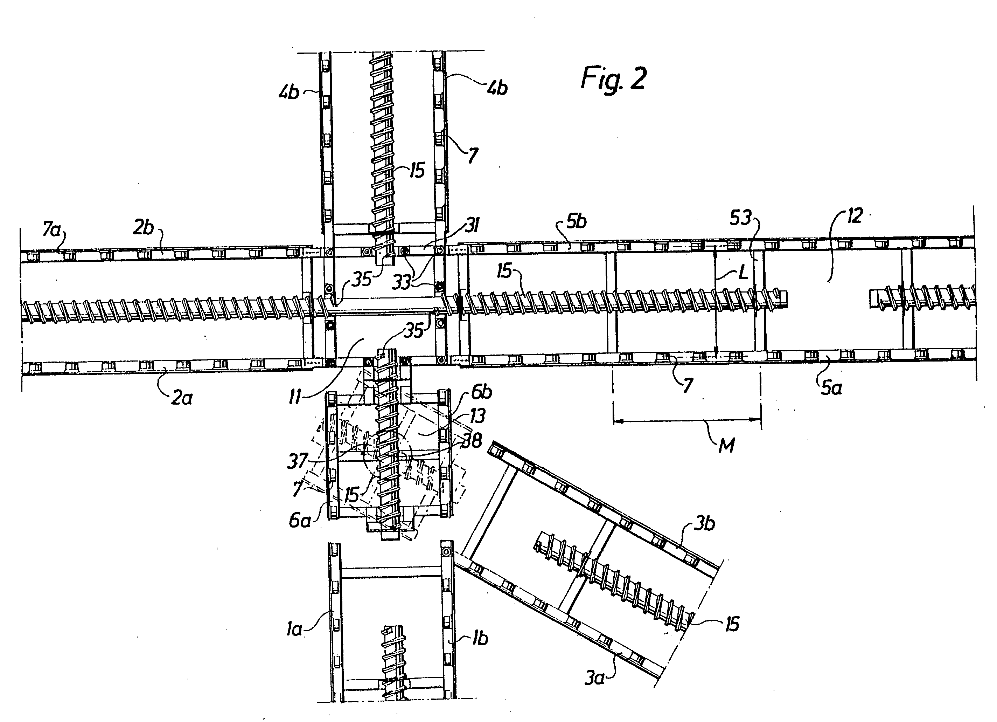

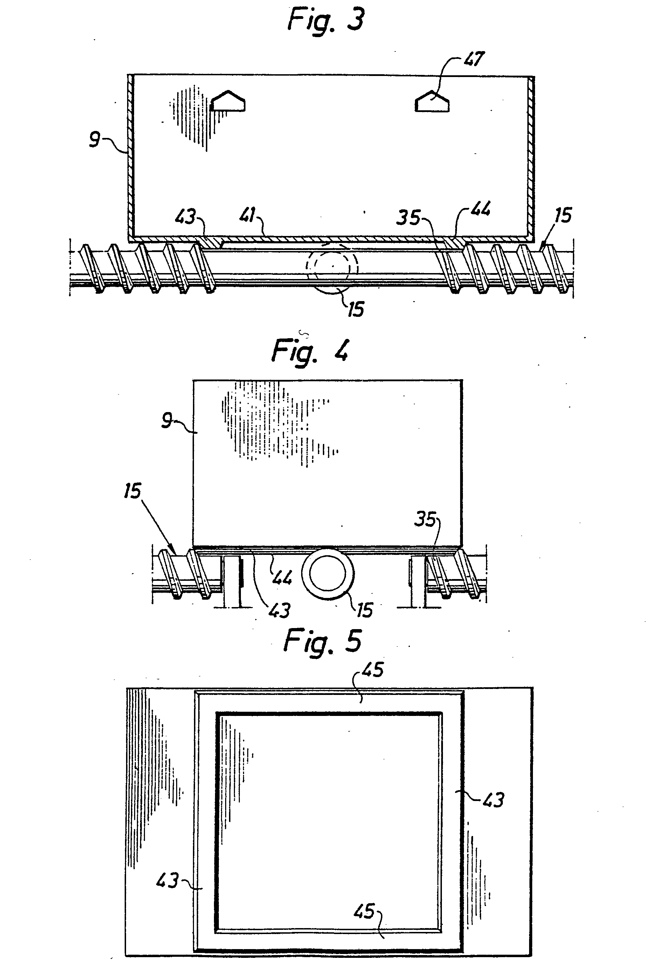

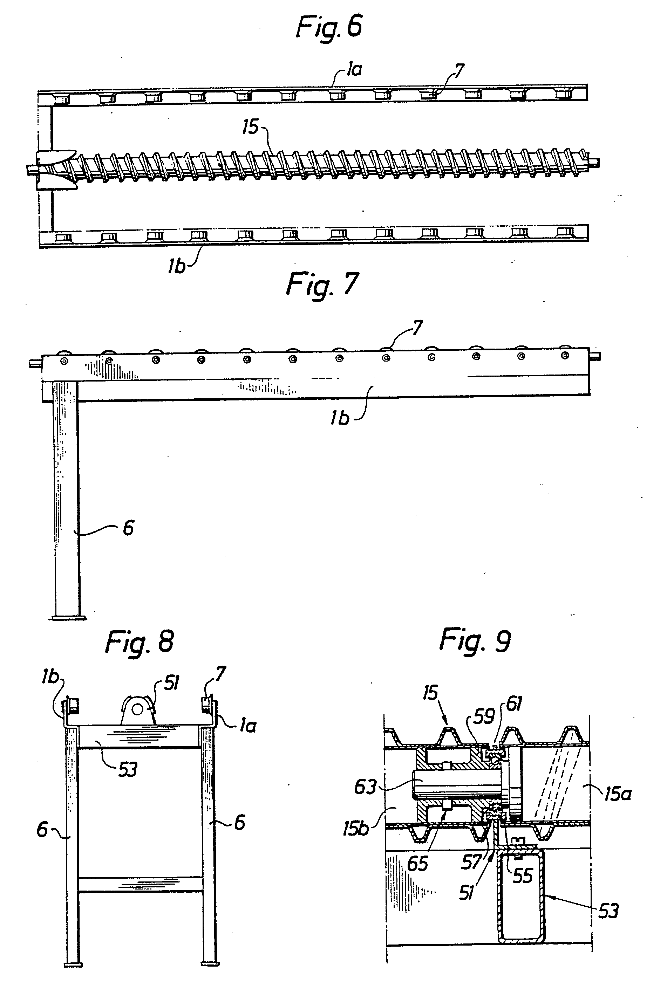

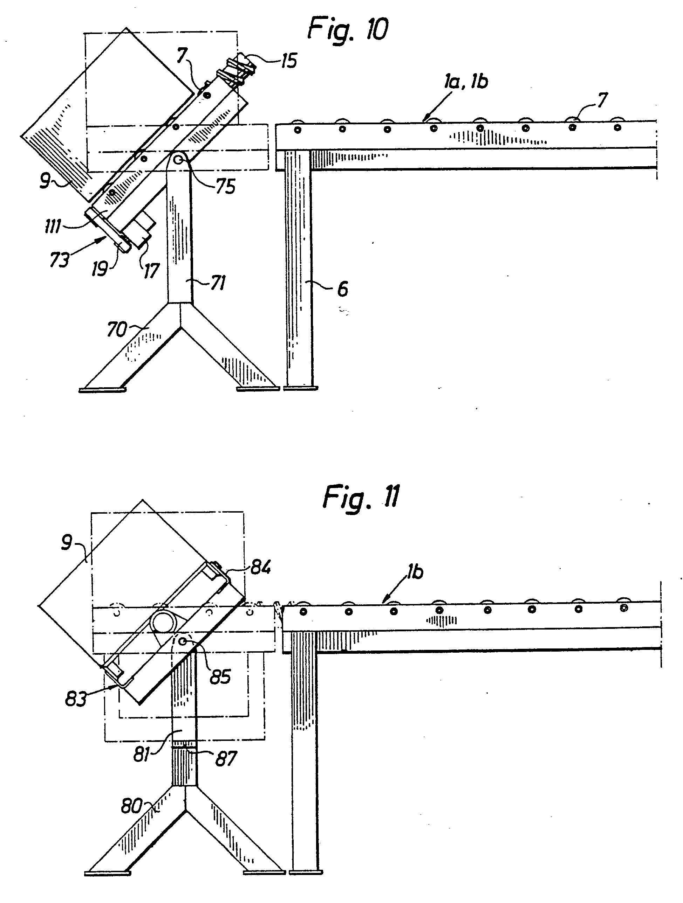

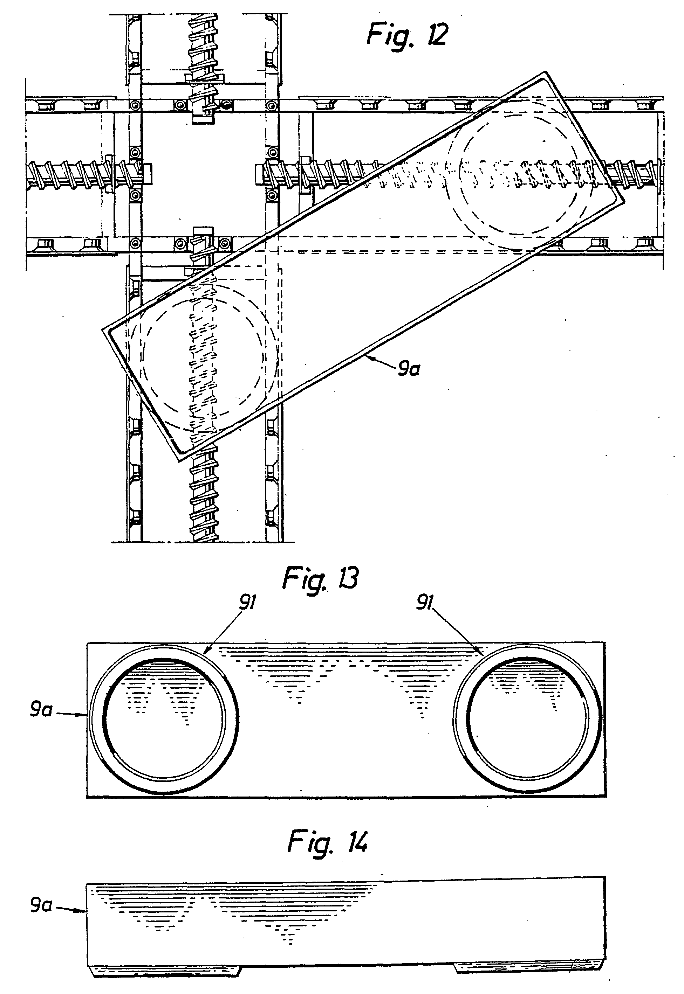

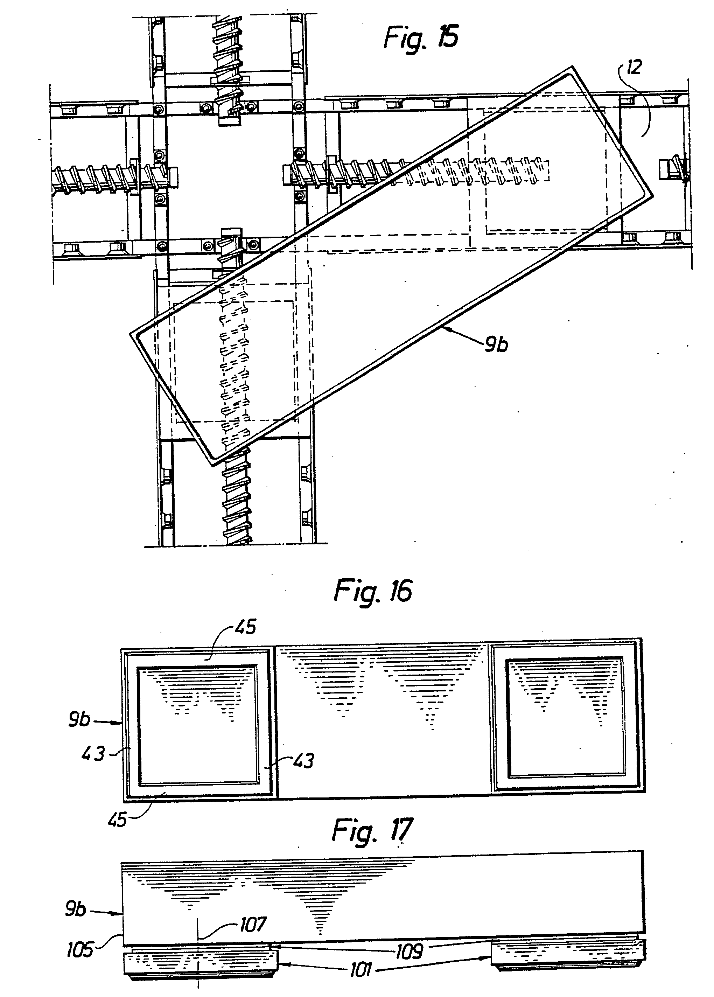

On the attached drawings there is shown an embodiment of a transport system according to the invention as well as details thereof. Fig. 1 shows in perspective a representative section of the transport system according to the embodiment. Fig. 2 shows the same section as Fig. 1 but seen from above. Fig. 3, 4 and 5 show a generally parallelepipedic product carrier for the transport system, seen from below, in longitudinal section and from the short end side, respectively. Fig. 6, 7 and 8 show, seen from above, from the side and from the end, respectively, a portion of a frame included in the system. Fig. 9 shows in longitudinal section transporting screws included in the system. Fig. 10 is a side elevation of an arrangement for transferring transported products between different horizontal planes. Fig. 11 is a side elevation of a device for changing the direction of the product transported in both the vertical and the horizontal planes. Fig. 12, 13 and 14 shown from above, from below and from the side, respectively a product carrier according to the invention and at the same time the support of the product carrier and its movement in the transport system. Figs. 15—21 show in a similar manner another embodiment of the product carrier.

The section of the transport system of the invention shown in Fig. 1a comprises a frame, which includes a first pair of carrier beams 1a, 1b, on which a plurality of horizontally supported carrier rollers 7 for product carriers 9 are rotatably mounted, and additional, similar pairs of carrier beams 2a, 2b, 3a, 3b, 4a, 4b and 5a, 5b with similar carrier rollers. The carrier beams are supported from a base or floor by means of legs 6. The various pairs of carrier beams with their carrier rollers form an equal number of generally horizontal transport lines for the product carriers 9. These carriers are illustrated in Fig. 1 as being of box shape but they can be of any other desirable shape depending on the product to be transported. The transport lines can be interconnected mutually by means of a switching station 11 and a turning station 13 in the manner described hereinbelow.

During the advancement of the product carriers 9 on the carrier rollers 7 of the carrier beams the product carrier is guided laterally by guide flanges 7a on the carrier rollers which flanges abut against the external longitudinal side of continuous rims 43, 45 located at the bottom side of the product carrier, against the bottom surface of which rims the carrier rollers are rolling, see Fig. 3 to 5. The number of carrier rollers per unit length of the carrier beams is such that each product carrier is always supported by at least three pairs of carrier rollers.

For the advancement and the position identification of the product carriers there are provided between the carrier beams of each pair of beams special rotatable screws 15 in the thread grooves of which cams, ledges or the similar engagement members 43, 45, see Fig. 3 to 5, at the bottom of the product carriers, mesh. The cross-sectional profile of the thread grooves corresponds in shape and size with the cross-sectional profile at the rims 43 and 45. According to Fig. 1 the transporting screw 15 is common to the transport lines 2a, 2b and 5a, 5b. Threads are lacking along the portion of the transporting screw which passes a switching station 11 described more closely later. The screws are supported from the frame by means of special bearings, which are shown in more detail in Fig. 10 and they are driven by motors 17, which allow an exact determination of the number of revolutions to be carried out by the motor in order to perform a certain transport operation and exact recording of the number of revolutions carried out by the motor. The transmission between the motor 17 and the screw 15 is performed by means of a non-skid belt, e.g., a toothed belt 19, and is arranged not to surpass in height at any portion thereof the bottom surface of the rims 43, 45 of the product carrier.

In Fig. 1 there is also shown a station 21 with means for so-called under-stacking (stacking from below) of product carriers 9, comprising arms 23 for clamping the lowermost product carrier in a stack of product carriers—in Fig. 1 a stack of two such carriers—and raising the stack at stacking and lowering the stack at the removal thereof by means of the transport system, all in a manner known *per se* in other connections.

In Fig. 2 the main portion of the section according to Fig. 1 is shown as seen from above. The switching unit 11 comprises a frame in the form of a horizontal, square framework 31 of carrier beams, which, however, is not provided with carrier rollers for the product carriers, as the carrier beams described above, but are instead provided with ball-shaped carrier members 33, one in each corner of the framework and one at each side of the transporting screws 15 belonging to one each of the transport lines connected to the switching station. The ends of the transporting screws connected to the switching station have their threads squarely terminated, and the ends of the threads are referenced 35.

The ball supports 33 support the product carrier at the same level as the rollers 7 of the transport lines and the distance between the ball supports are equal to the distance between the rollers 7. The ball supports may also in a manner known *per se* consist of spherical balls, e.g., steel balls mounted in ball retainers so that the balls may be rotated in all directions, which is known *per se* in other connections.

The product carrier according to the embodiment illustrated in Fig. 3 to 5 comprises a parallellipipedic box of plastic material, e.g. polyethylene, with a bottom 41 formed with ridges rims or other engagement members 43, 45 in the transverse and the longitudinal direction, respectively, the cross-section of which matches the cross-section of the thread grooves of the screws 15. The ridges 45 are located as near to the longitudinal sides of the box as possible and the distance between the rims 43 are equal to the distance between the ridges 45. The cross-section of the ridges is trapeziodal, with the large base located at the bottom of the box. The box 9 can be formed with apertures 47 forming carrying grips in the side walls.

Fig. 3 to 5 show the position of the product carrier 9 when it is located centrally of the switching station 11 to which it has been advanced along any of the transport lines connected to the station. At this location the product carrier is supported only by the ball shaped support members 33. The advancement to the station is performed by means of the screw 15 belonging to the transport line in the threads of which the ridges 43 or 45 engage during the transport.

The transporting screws are rotatably supported in the manner illustrated in Fig. 8. On a cross beam 53 between the carrier beams, e.g., the carrier beams 1a and 1b, a support 51 is secured, which is plate shaped and projects upwardly through a slot 61 between two sections 15a and 15b of the tubular screw 15. The support carries a bearing shell 55 for a ball bearing 57. The external diameter of the bearing shell 55 is such that the bearing shell is completely located within the transporting screw. The bearing 57 encloses a bearing sleeve 59 on one section 15b of the transport roller, said bearing sleeve being supported by and secured to the inner wall of the tubular section 15b. The sleeve 59 has a central bore, which tightly encloses a stud 63 projecting from the adjacent end of the other screw section 15a and secured thereto, said stud being locked in respect of rotation to the sleeve 59 by means of a locking pin 65.

The transporting screws 15 may be rotatably supported in the manner illustrated in Fig. 9 at any location along its length as well as at its ends, and from Fig. 8 it is evident that the bearing device does not interfere into the interspace between the screw threads of the upper portion of the transporting screws cooperating with the lower rims 43, 45 of the product carriers, but the product carriers can be advanced unhindered by the screws past each such bearing location.

When a product carrier has arrived at the location illustrated in Fig. 3 to 5, corresponding to the switching station 11 according to Fig. 2, the transporting screw that advanced the product carrier is stopped. All transporting screws are stopped in a predetermined angular position, wherein the end 35 of the screw thread is located below the level of the lower surface 44 of the ridges 43 and 45, respectively, cooperating with the screw at the bottom side of the product carrier. In the position of the product carrier shown in Figs. 3 to 5, i.e., at the switching station 11, the location of the product carrier is fixed since each of the ridges 43, 45 are in abutment with the first thread of each of the four transporting screws which have connection with the switching station. It should be remembered that the ends 35 of the threads of all those transporting screws, when they are idle, are always located at a level below the lower surface 44 of the ridges 43, 45 of the product carriers. This means that a product carrier, which is advanced by one of the screws, while the remaining three screws are idle, unhindered by the thread ends 75 of the three idle screws, can be placed in the correct position centrally of the station 11, where the product carrier will become fixedly positioned by means of the ridges 43, 45 abutting the first thread ridge of all four connected screws. It also means that thereafter a product carrier may be transported from the switching station by driving any one of the transporting screws, while the remaining screws are idle, the direction of rotation of the driven screw being opposite to the direction of rotation of the same screw upon advancement by means of said screw of the product carrier in a direction towards the switching station.

In a system comprising a plurality of switching stations and a plurality of transport lines it is thus easily possible, by driving different transporting screws in turn, to secure that each product carrier will arrive at its special destination.

Another important advantage of the system disclosed is evident from the following. Since the transporting screws are always stopped in a predetermined angular position, a transporting screw, which has been started, will always complete an integral number of revolutions before it is stopped again. According to the invention this feature may be taken advantage of in a simple manner by utilizing means known *per se* for counting and recording the number of revolutions completed by each screw taking part in the transport of the product carrier in question, whereby an exact information is obtained of where a certain product carrier is situated in the transport system at any moment, and it may not least be utilized, by pre-programming the operation of the transporting screws relevant for the transport of a certain product carrier, to secure that the product carrier will reach its ultimate destination in the shortest possible time.

In Fig. 2 a station 13 is illustrated, wherein a product carrier can be turned around a vertical axis for transferring same to a transport line 3a, 3b which is not parallel or perpendicular to the other transport lines referred to. The turning station comprises carrier beams 6a, 6b with carrier rollers 7 and a motor driven transporting screw 15. The frame formed by the carrier beams and the members supporting said beams is mounted on a turning platform 37 so that it is rotatably around a vertical axis 38 and adjustable from the position shown in Fig. 1 by full lines to the position shown in Fig. 1 by dotted lines, in which the carrier beams 6a, 6b are located aligned with the carrier beams 3a, 3b of the angularly disposed transport line. The switching of the assembly 13 around the axis 38 between said positions may be performed simply by means of driving members not shown, e.g. one or more hydraulic cylinders or electric motors, in a manner known *per se*. The turning station 13 increases the possibilities of transporting product carriers along the shortest possible path to desired destinations within a given region.

In Fig. 10 an assembly is shown for transferring a product carrier between a transport line inclined to the horizontal plane and a transport line in the horizontal plane. The assembly comprises carrier beams 111 with carrier rollers 7, a transporting screw 15 and a drive motor 17 with belt 19. The assembly 73 comprising said components is rotatably mounted by means of a horizontal shaft 75 on a column 71 supported by legs 70 and shifting of the assembly about the shaft 75 can easily be performed by means of hydraulic or electric means in a well known manner. It is evident that when the assembly is shifted from the position shown in Fig. 10 by dotted lines, in which it is aligned with a connected transport line, e.g., 1a, 1b according to the Figure, to the position shown by full lines, the screw 15 of the assembly 73 will by engagement with the ridges at the bottom of the product carrier in a manner described above, prevent uncontrolled sliding of the product carrier on the carrier rollers 7 of the assembly. The product carriers can be moved in height upwards as well as downwards by means of the assembly illustrated for the transfer of the product carrier to a transport line directed obliquely downwards or upwards, respectively, (not shown).

In Fig. 11 an arrangement is shown comprising an assembly 83 with carrier beams 84, a transporting screw 15 and transport rollers 7, said arrangement enabling the inclination of the transport carrier around a shaft 85 in parallel with the axis of the appertaining transporting screw 15 and by means of which the assembly 83 is pivotably supported by a column 81 of a supporting frame placed on a base. The supporting frame comprises legs 80 which support the column 81 by means of a fulcrum 87 having a vertical axis of rotation. The object of the arrangement according to Fig. 11 is primarily to turn the product carrier in a transport flow to a selected direction laterally and to a selected angle of inclination, the latter upon transport along an inclined assembly line for instance. The inclination of the carriers as shown in Figs. 10 and 11 may also facilitate the picking of products from the product carrier.

The stacker 21 shown in Fig. 1 may be positioned adjacent the line in the transport flow or at a storage place. Such stackers which can also be controlled by a computer program, can be arranged in such a manner that when a product carrier has been advanced and stopped in position for the stacker, lifting arms 23 are extended from their idle positions forwards to the product carrier, grip it by means of the arms 23 in the open apertures 47 and lift the product carrier upwards from the transport line to such an extent that a subsequent product carrier can pass well to a switching station, machining station, inspection station or another storage place or pass below the raised product carrier and stop in position in front of the stacker, which then receives an impulse to lower and thus stack the raised product carrier onto the one just arrived and then return to its idle position. The position in the stack of the product carriers now stacked one above the other is defined exactly and the operation of the stacker can easily be recorded and controlled by means of a computer system both at the build up of the stack, and also at the build down thereof when product carriers are taken from the stack by means of computer programmed transporting screws and transported to individual destinations or to a common place for storage. All product carriers, which are here loaded with details, which may be placed on the product carriers in the coordinate or control system selected for, e.g. a numerically controlled machine tool have thus their positions well defined not only in the horizontal plane but also in height, whereby upon subsequent assembly or storage in spare parts storage each product carrier can be recalled to the position described in front of the stacker so as to be transported later by means of the screws by aid of the computer to a station, at which the products are picked from the product carrier, for instance by means of a robot.

If the units included in the transport system of the invention are dimensioned according to a convenient modular system, different systems may be built up of a minimum number of mutually different parts. The decisive dimension for the transport and storage system is the distance L between the centre lines of the two ridges 43 at the bottom of the product carrier, see Fig. 5, said dimension being equal to the distance between the centre lines of the two remaining ridges 45.

The modular length M of the frame parts is then determined in such a manner that one frame module comprises four pairs of carrier guide rollers 7, having a pitch (mutual distance) of M/4, arranged along their length, the width of the frame parts being selected so that the distance L between the longitudinal centre lines of the rollers 7 on the one end and the other carrier beam is $\frac{3}{4}$M. It is evident that by means of the arrangement of four pairs of carrier rollers per frame module a product carrier will always be supported by at least three pairs of carrier rollers, which secures the stability. Generally, the centre distance between the roller pair at one end of the transport unit and the adjacent roller pair of an additional transport unit connected to said transport unit should be identical with the equal centre distances between the uniformly distributed roller pairs of each transport unit. The frame parts can also be made longer in order to be more easily combined to long transport lines. The length of the frame part is then always chosen to be 2, 3, 4 ... n×M, i.e. an integral multiple of M.

The number of thread turns of a transporting screw having a single thread start and a length equal to M is always an integer and the value of the number is selected so that the number of thread turns over a length $L=\frac{3}{4}$M along the screw is also an integer. Hereby a screw can always mesh with two of the four ridges of the product carrier and the product carriers will always occupy well controlled positions, since the motor 17, as mentioned above, will start and stop the screw at one and the same point of the turn.

For the transport of goods consisting of elongated elements or the like, where said elements extend longitudinally over two or more modules, product carriers 9 according to Fig. 4, 5 or 6 are not convenient. For such transport product carriers of a special design can be used, which may have any desirable length from $2 \times M$ to $n \times M$. In Figs. 12 to 14 it is shown that two ridges 91 cooperating with the transporting screws 15 at the bottom side of said product carriers have the same profile as the rims 43, 45 on the product carrier 9 but extend in a circle with the diameter=L, i.e. $\frac{3}{4}$M. The rims 91 are provided at both ends of the product carrier in the transport direction. At the transport across a switching station 11 and/or a station 13 for lateral turning for changing the direction of transport a smooth and continuous movement of the product carrier in the two transport directions across these two stations is achieved by trigonometric computer control of the operation of the two transporting screws, and hereby the product carrier will always be supported on each transport line simultaneously by at least four carrier and guide rollers 7 or two carrier and guide rollers together with at least two ball rollers 33.

The product carrier 9b according to Fig. 15, 16 and 17 has the same task as the product carrier 9a according to Fig. 12 to 14 but is composed of two carrier units 101, which are provided with ridges 43, 45 according to Fig. 3 to 5 in a similar manner as the product carriers 9, said units then being coupled to a carrier platform 105 via a fulcrum 109 which is provided in the centre 107 of the carrier units and has a vertical axis. The distance between the two fulcrums can have the same selected modular length as the length of the product carrier 9a, but here an addition of a constant must be made to the length. This condition is determined by the fact that in the use of product carriers, which are provided with the same definite length, the transport lines at the switching stations 11 and the turning stations 13 have always the same selected modular length in respect of their transporting screws up to the open module 12, which is shown in Fig. 2 and 15, whereby the product carrier 9b together with the carrier units 101 may pass via a switching station, the forwardmost carrier unit 101 being gripped by the screw in the new direction and leaving the former transport direction, said latter screw now being idle, the rearmost carrier unit instead being advanced by the screw outside the open module 12 due to the extension constant mentioned above. At continued transport across the switching station and the open module 12 the previously idle screw will grip the rear carrier unit and upon continued transport of the product carrier 9b from the station the movements described of the product carriers and the screws are repeated. The direction of rotation of the transporting screws is determined by the transport direction desired.

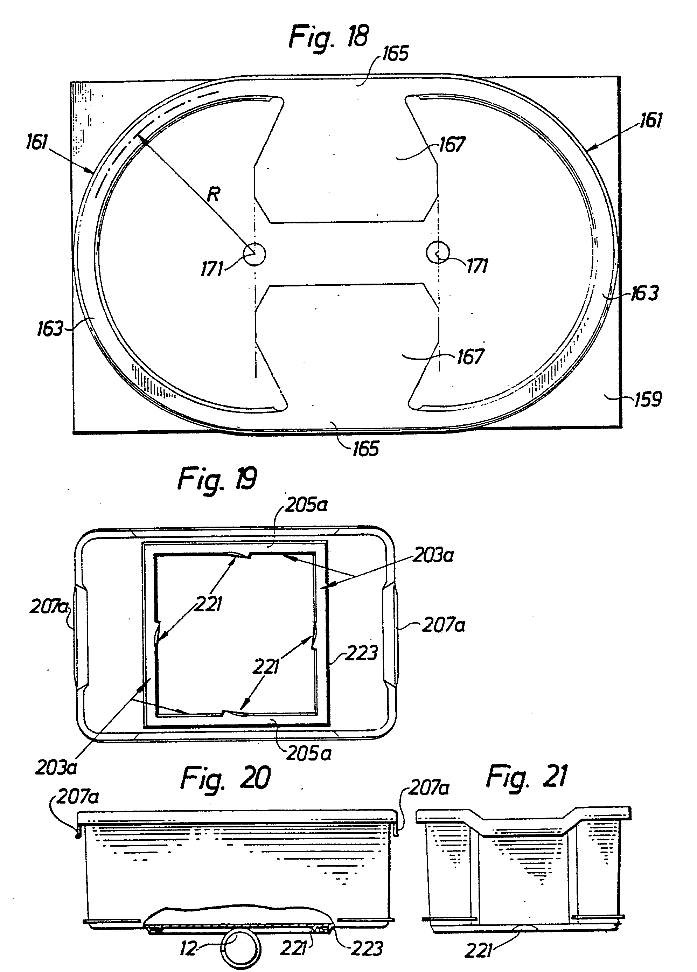

The product carrier 159 shown from below in Fig. 18 is elongated and the bottom thereof is at both ends provided with a ridge 161 of half-circular configuration having center axes 171, said ridges being identical and being interconnected by two straight ridges 165 the length of which being equal to the outer radius R of the ridges 161 and the distance between the center axes 171. The bottom flat surface of the ridges 161 is at the same level as the bottom flat surface of the straight portions 165 and the bottom flat surface of two central areas 167 each adjacent one of said straight portions.

This embodiment has advantages as follows. The elongated ridge configuration will enable a rectangular product carrier supported by said ridge configuration to maintain its direction in the transport system. Product carriers in the form of boxes can be stacked independently of the oval ridge configuration. Product carriers equipped with a load platform and a load supporting beam swingably mounted at one of the center axes 171 of the ridges 161 can be used together with a similar product carrier having a corresponding load supporting beam for transporting elongated long products, since the transporting screws will always maintain the correct distance between the center axes of the product carriers where the swingable beams are mounted, and this not only during transport along a straight line but also during transport via a switching station, if the beams are mounted at the center axes which give the shortest distance between the beams.

In the product carriers described above the engagement members are formed by said ridges, the cross-sectional profile of which is shaped in correspondence to the profile of the thread grooves of the transporting screws. The contact between the ridge and the screw takes place along a line extending from the base of the ridge at the bottom of the product carrier to the bottom end surface of the ridge. By this line contact the material of which the ridges consists which may be plastic material, for instance, will be exposed to a high specific pressure in the narrow zone corresponding to the line contact, and this may lead to a too rapid weardown of this portion of the ridge and a correspondingly reduced fit or play at the movement of the product carrier by means of the transporting screws and a deteriorated precision as to the determination of the position of the product carriers in the system. This can be avoided by providing the ridges with a profile as shown in Figs. 19 to 21.

A characterizing feature of this improvement is that the inner side of the ridges at the location at which they cross the transporting screws are formed with a surface portion adapted to abut against the thread ridge of the transporting screws and having generally the same, geometrical form as the surface of the thread ridge against which said surface portion abuts. Preferably, said surface portion of the ridges of the product carrier and the thread sides of the transporting screws are shaped so that a play, if any, in the engagement between the screw and the product carrier can be controlled and eliminated by changing the mutual height positions of the screw and the product carrier.

Figs. 19, 20 and 21 show a product carrier of this type as seen from below, from one side, and from the end, respectively.

The product carrier is in the form of a box having rectangular shape and is provided at the bottom side with ridges or rims 203a and 205a which together form a square.

The positions 221 of the ridges at which the ridges engage an underlying screw 12 is, according to this embodiment of the invention, formed with a surface portion at the inner side adapted to abut against the thread ridge of the screw, the shape of said surface portion coinciding with the helical surface of the side flank of the thread ridge, which flank as closely as possible slides against said surface portion of the ridge and causes the advancement of the box in the system. Said surface portion 221 of the ridge, as illustrated in Fig. 21, is a circle segment seen in projection in a plane perpendicular to the axis of the transporting screw, and its shape should be such that it makes contact along all of its surface with the flank of the thread ridge of the screw 12. Thereby, the specific pressure between the thread ridge and the surface 21 of the rim is reduced which, as mentioned above, will cause less wear and a reduced play in the system.

The circle segment surface 221 can while maintaining its helical surface shape be more extended than corresponding to the real engagement surface proper between the rim and the screw, whereby the shape of the engagement surface 21 and the flank of the thread ridge can be such that a reduction of the distance between the product carrier and the screw will cause elimination of the play, which may anyhow occur in the system, while an increase of said distance will cause the elimination of any seizures in the system. The proposed possibility of adjusting the mutual height position of the product carrier and the screw may also lead to somewhat lower requirements of precision in the manufacture of the product carriers and the remaining system components.

As mentioned above, the ridges 203a and 205a form a square but they may also form a rectangle or in certain applications, which are not described here, a circle.

The external side 223 of the ridges may have a shape corresponding to guide flanges provided on the carrier rollers of the system.

The box-shaped product carrier is provided with handles 207a. Of course the product carrier need not always be of box shape. In some cases a simple board, for instance, without side walls may be preferable. It should also be mentioned that the product carrier can be integrated with the product proper and be formed for instance by ridges of the kind mentioned above mounted or formed on the product. The surface portion of the inner side of the ridges according to the invention, abutting against the thread ridge and of special shape, may, if desired, be covered by a more wear resistant material than the material of which the ridge proper is formed. In the region of said surface portion the ridge may as an alternative consist of such a wear resistant material.

As mentioned above, the transport system according to the invention is particularly well adapted for control and monitoring by means of a computer system, which may be of a conventional type and therefor is not described more closely in the present connection. The principle is simple, since the computer system need only comprise means for controlling the drive motors included in the transport system for the transporting screws 15 in such a manner that the motors will receive impulses for rotation and integral number of revolutions, whereby the number of revolutions completed by each motor taking part in the transport of the product carrier can be recorded and each motor be stopped after completed the programmed number of revolutions. Then means are added for programmed control of the switching stations and the turning stations, as mentioned above, but also this feature belongs to elementary technique in the field of computer control of mechanical systems.

It should be remembered that each product carrier in the system always has its position in space well defined since it is always in engagement or has contact with threads of the transporting screws of the components included in the system, and since in stacking and unstacking, respectively, requires a control of the stacker which is easy to record and/or control by a computer. Even when the product carrier is located on turnable units or inclineable units it is fixed in position by the engagement with a transporting screw of the system. The weight of the product carrier and its contents, if any, will prevent an inadvertent change of position in a vertical direction of the product carriers, which in the absence of stop members of the transport units preventing movement upwards of the product carriers, are freely liftable at any time from the transporting units and replaceable, which is an advantage.

As an example of the type of motors, which may be used for the operation of the transporting screws comprised in the system of the invention, motors manufactured by Brown Boveri of the type AXEM (Registered Trade Mark) may be mentioned, which allow a position control so that the driven screw will always complete an integral number of revolutions and will not stop in an intermediate position.

However, it is also possible to use normal, less costly asynchronous motors, given the fact that the speed of rotation of such a motor is almost unequivocally determined by the frequency of the alternating current supplied to the motor. In such a case a static, 3-phase chopper may be used which generates a sinusiodal alternating current the frequency of which may vary between 0 (direct current) and 60 Hz (or higher). The root mean square of the alternating current is maintained constant within the entire frequency range which results in a constant torque from stand-still up to the nominal speed of rotation, e.g. 50 Hz, of the motor. A digital control unit which can be controlled by a computer can be used for controlled acceleration and retardation (braking), regulation of the speed of rotation and positioning. Two or more control units may be used to control more complicated situations. The only modification of a normal asynchronous motor that is required is the addition of an angle indicator having direction sensing means and zero position indication. In a practical embodiment said angle indicator may produce, for instance, 64 pulses per revolution of the asynchronous motor, said pulses being used for controlling the motor.

The invention is not limited to the embodiments illustrated and described but may be realized in other manners within the scope of the appending claims.

Thus, the product carrier, which in most cases will have the shape of a box may have any other shape and may also be integrated with the product to be handled, since the product proper may be provided with ridges, corresponding to the ridges 43, 45 by means of which the product is supported by the carrier rollers and advanced by the transporting screws in the system.

Further, it might be mentioned that the transporting screws, which preferably have one single thread start, may also be screws with two, three, etc, thread starts. In such case the drive of the screws may be such that the screw is always stopped in a position corresponding to half, a third, etc, of a complete revolution.

The engagement members in the form of ridges at the bottom side of the product carrier has a profile corresponding to the groove profile of the transporting screw, but this feature need only refer to the central portion of the ridges, since the remaining portion of the ridge need only have such a profile that it can pass by the thread ridges of the transporting screws at the switching stations at the same time as it unrolls against the carrier rollers, as described above. The engagement members need not either always be identical to the ridges, by means of which the product carriers are supported by the carrier rollers of the system, and which according to the embodiment examples form an unbroken rectangle, but the engagement members may if desired also be located for instance, immediately outside these ridges, provided that their profile is such that the ridges can pass freely through the screw grooves of the transverse transporting screws.

Since the mechanical work to be performed by the transporting screws is rather limited the screws can be of a light-weight construction and be made of a plastic material, or they may be manufactured by helical deformation or deep-drawing of a thin-walled tube of steel or other metal.

## Claims

1. A system for the transport of product carriers comprising a plurality of elongated transport units adapted to be interconnected to form a transport network, each of said transport units comprising a frame (2a, 2b; 4a, 4b; 5a, 5b) and an elongated transporting screw (15), driving means for rotating said transporting screws, the threads of which being adapted to cooperate with engagement members (43, 45) provided at the bottom of a product carrier (9) in such a manner that the product carrier, when the screw is driven, is caused to move along the transport unit, characterized by at least two transporting screws (15) extending to a junction (11), a product carrier (9) provided with two engagement members (43, 45) spaced from one another in the direction of travel and each meshing with the thread of the respective transporting screw during transport, the transporting screws being arranged such that they stop in a predetermined angular position such that, at the junction (11) the engagement members (43, 45) of the product carrier (9) do not mesh with the thread of any transporting screw (15) in the stopped position, but mesh with the thread of any transporting screw (15) when started, in order that the product carrier (9) may be moved away from the junction (11) by a transporting screw (15) other than the one by which is was moved to the junction.

2. A system as claimed in claim 1, characterized in that the frame of the transport units comprises two longitudinal carrier beams (1a, 1b, 2a, 2b etc.), each provided with a plurality of carrier rollers (7) adapted to support the product carriers (9) while unrolling against ridges or rims (43, 45), provided at the bottom of the product carriers, said transporting screw being located between and in parallel with said carrier beams.

3. A system as claimed in claim 2, characterized in that the ridges (43, 45) also serve as said engagement members.

4. A system as claimed in any of the preceding claims, characterized by one or more switching stations (11), adapted to interconnect two or more transport units and arranged so that a product carrier at a switching station has its engagement members located immediately adjacent the thread ridge of the first thread turn of the transporting screw of each of the transport units connected to the switching station, so that the product carrier from the position at the switching station can be gripped by one and whichever of said transporting screws when rotated, said product carrier being then advanced along the transport unit corresponding to the rotated transporting screw.

5. A system as claimed in claim 4, characterized in that said switching station (11) comprises a frame (31), the upper portion of which comprising a plurality of support members (33) supporting said product carrier (9) at the switching station and adapted to allow rolling transport of the product carrier in all transport directions represented by the transport units connected to the switching station.

6. A system as claimed in claim 5, characterized in that the support members (33) consist of balls rotatably supported in spherical retainers.

7. A system as claimed in any of claims 4 through 6, characterized in that the switching station (11) is square or rectangular with a connection facility for one transport unit at each side of the square or rectangle, respectively.

8. A system as claimed in any of the preceding claims, characterized by one or more stations (13) adapted to move a product carrier (9) at a station horizontally between at least two transport directions and provided with roller members (7) for supporting the product carriers and a transporting screw (15) with separate driving means.

9. A system as claimed in claim 8, characterized in that the station (13) for moving the product carrier horizontally is rotatable about a vertical axis (38).

10. A system as claimed in any of the preceding claims, characterized by one or more stations (73) adapted to move a product carrier (9) at a station in a vertical plane between at least two transport directions and provided with roller members (7) for supporting the product carriers.

11. A system as claimed in claim 10, characterized in that the station (73) for moving the product carrier in a vertical plane is rotatable about a horizontal axis (75).

12. A system as claimed in claim 11, characterized in that said station (73) for moving the product carrier in a vertical plane is provided with a transporting screw (15) with separate driving means (19) and is rotatable about a horizontal axis, located in a common plane with the transport screw of the station.

13. A system as claimed in claim 11, characterized in that the station (73) for moving the product carrier in a vertical plane is provided with a transporting screw (15) with separate driving means (19) and is rotatable about an axis (75) which is perpendicular to a vertical plane comprising the transport axis of the station, thus allowing the transfer of product carriers between transport units having different inclination to the horizontal plane.

14. A system as claimed in any of the preceding claims, characterized in that the components included in the system, including the transport units, switching stations and the stations for moving the product carriers in the vertical and horizontal planes, are composed according to a modular system, according to which the components have predetermined modular dimensions matched to each other, enabling the composition of transport systems of various dimensions and various network configuration by means of a minimum number of module types.

15. A system as claimed in claim 14, characterized in that the transport units have a predetermined modular length (M) in the direction of the transporting screw and that the distance L between the centre lines of the rows of carrier rollers provided on each of the carrier beams of the transport units is equal to $\frac{3}{4}$M.

16. A system as claimed in claim 15, characterized in that the product carrier (9) are provided at their bottom side with four ridges (43, 45), serving as supporting members for the product carriers and as engagement members for the transporting screws (15), said ridges forming together a rectangular, substantially unbroken frame, the size of which is determined by the size of the product carriers, the distance beween the centre lines of two opposite ridges of the frame being equal to L.

17. A system as claimed in claim 16, characterized in that each transport unit is provided with at least four pairs of carrier rollers with an equal mutual centre spacing, which at the same time is equal to the centre spacing between the roller pair at one end of a first transport unit and the adjacent roller pair of a second transport unit, connected to the first transport unit.

18. A system as claimed in claim 15, 16 or 17, characterized in that both the modular length M and the distance L are an integral multiple of the extension in the longitudinal direction of the transporting screw of a complete thread turn, half a thread turn, etc. of a transporting screw having one thread start, two thread starts, etc.

19. A system as claimed in any of the preceding claims, characterized in that it comprises elongated product carriers (9a), which are provided at each end portion with engagement members (91) at the bottom of the product carrier in the form of ridges forming frames, each being adapted to mesh at two positions with an underlying transporting screw, means being provided for such driving of the transporting screws of two transport units, connected to each other angularly, that the elongated product carrier is transported from one end to the other of the transport units.

20. A system as claimed in claim 19, characterized in that each of the ridge frames (91) is circular and preferably fixed in relation to the product carrier.

21. A system as claimed in claim 19, characterized in that each of the ridge frames is square and mounted on a carrier unit (101), which in relation to the product carrier (9b) is turnable about a vertical axis (107) through the centre of the square.

22. A system as claimed in any of the claims 1 to 19, characterized in that it comprises product carriers (159) provided at the bottom thereof with ridges (161) for engagement with the transporting screws, said ridges comprising two half-circular ridges one at each end of the product carrier and two straight ridges (165) having a length equal to the radius of the half-circular ridges (161) and interconnecting the ends of one half-circular ridge with the ends of the other.

23. A system as claimed in any of the preceding claims, characterized in that the inner side of the ridges of the product carriers, at the location at which they cross the transporting screws, are formed with a surface portion which is adapted to abut against the thread ridge of the transporting screws and has generally the same geometrical form as the surface of the thread ridge against which said surface portion abuts.

24. A system as claimed in claim 23, characterized in that, seen in projection in a plane perpendicular to the screw, said surface portion is substantially of the same size as a segment of the transporting screw, limited by a chord, forming a tangent to the bottom of the thread groove.

25. A system as claimed in claim 24 or 25, characterized in that said surface portions of the ridges and the thread flank of the transporting screws are shaped so that the play in the engagement between the screw and the product carrier can be adjusted by changing the mutual height position of the screw and the product carrier.

26. A system as claimed in any of the preceding claims, characterized in that the transporting screws (15a, 15b) of the transport units and other components are rotatably supported by bearing members (55, 57) in such a manner that no fixed part of the bearing members extends higher than the level of the bottom of the thread groove at the upper portion of the transporting screw cooperating with the engagement members of the product carrier.

27. A system as claimed in claim 26, characterized in that the transporting screws (15a, 15b) are rotatably supported in mountings, which within the screws support a bearing sleeve (59) for roller bearings (57), having a shaft stud (63) secured at both ends with the end portions of the screw of screw portions located on either side of the bearing location.

28. A system as claimed in any of the preceding claims, characterized in that the transporting screws (15a, 15b) are formed by helical, preferably rolling deformation or deep-drawing of a thin-walled steel tube.

29. A system as claimed in any of the preceding claims, characterized by a computer apparatus for the control of the operation of the transporting screws of the system according to a predetermined program for each product carrier and for the recording of the number of revolutions completed by each of the transporting screws taking part in each transport for allowing identification at any moment of the position of the product carrier in the transport system.

**Revendications**

1. Ensemble pour le transport d'organes porteproduit comprenant une multiplicité d'unités transporteuses alongées adaptées à être reliées entre elles pour former un réseau transporteur, chacune desdites unités transporteuses comprenant un châssis (2a, 2b; 4a, 4b; 5a, 5b) et une vis transporteuse allongée (15), des moyens d'entraînement propres à faire tourner lesdites via transporteuses dont les filets sont adaptés à coopérer avec des organes de prise (43, 45) disposés au fond d'un organe porte-produit (9) de telle façon que l'organe porte-produit, lorsque la vis est entraînée, se trouve mis en mouvement le long de l'unité transporteuse, caractérisé par au moins deux vis transporteuses (15) aboutissant à une jonction (11), un organe porte-produit (9) muni de deux organes de prise (43, 45) espacés l'un de l'autre dans la direction de circulation et engrenant chacun avec le filetage de la vis transporteuse respective au cours du transport, les vis transporteuses étant disposées de telle façon qu'elles s'arrêtent en une position angulaire prédéterminée telle que, à la jonction (11), les organes de prise (43, 45) de l'organe porte-produit (9) n'engrènent avec le filetage d'aucune vis transporteuse (15) dans la position arrêtée, mais engrènent avec le filetage de n'importe quelle vis transporteuse (15) une fois mise en mouvement, afin que l'organe porte-produit (9) puisse être éloigné de la jonction (11) par une vis transporteuse (15) autre que celle par laquelle il a été amené à la jonction.

2. Ensemble selon la revendication 1, caractérisé en ce que le châssis des unités transporteuses comprend deux poutres porteuses longitudinales (1a, 1b; 2a, 2b etc), pourvues chacune d'une multiplicité de galets porteurs (7) adaptés à supporter les organes porteproduit (9) en déroulant contre des arêtes ou listels (43, 45), ménagés au fond des organes porte-produit, ladite vis transporteuse étant située entre lesdites poutres porteuses et en parallèle avec celles-ci.

3. Ensemble selon la revendication 2, caractérisé en ce que les arêtes (43, 45) font aussi fonction desdits organes de prise.

4. Ensemble selon l'une quelconque des revendications précédentes, caractérisé par un ou plusieurs postes d'aiguillage (11), adaptés à relier entre elles deux unités transporteuses ou plus et agencés en sorte qu'en un poste d'aiguillage, les organes de prise d'un organe porte-produit se trouvent situés en adjacence immediate à l'arête de filetage de la première spire de filetage de la vis transporteuse de chacune des unités transporteuse reliées au poste d'aiguillage, de sorte que, de la position au poste d'aiguillage, l'organe porte-produit puisse être saisi par l'une quelconque desdites vis transporteuses lorsqu'elle a tourné, ledit organe porte-produit étant ensuite avancé le long de l'unité transporteuse correspondant à la vis transporteuse ayant tourné.

5. Ensemble selon la revendication 4, caractérisé en ce que ledit poste d'aiguillage (11) comprend un châssis (31) dont la partie supérieure comprend une multiplicité d'éléments de support (33) supportant ledit organe porte-produit (9) au poste d'aiguillage et adaptés à permettre une circulation par roulement de l'organe porte-produit dans toutes les directions de transport représentées par les unités transporteuses reliées au poste d'aiguillage.

6. Ensemble selon la revendication 5, caractérisé en ce que les éléments de support (33) sont formés par des billes supportées avec liberté de rotation dans des cages sphériques.

7. Ensemble selon l'une quelconque des revendications 4 à 6, caractérisé en ce que le poste d'aiguillage (11) est carré ou rectangulaire avec une possiblité de raccordement d'une unité transporteuse en chaque coté du carré ou du rectangle correspondant.

8. Ensemble selon l'une quelconque des revendications précédentes, caractérisé par un ou plusieurs postes (13) adaptés à déplacer horizontalement un organe porte-produit (9) en un poste entre au moins deux directions d'acheminement et pourvus d'organes de roulement (7) propres à supporter les organes porte-produit et par une vis transporteuse (15) à moyens d'entraînement séparés.

9. Ensemble selon la revendication 8, caractérisé en ce que le poste (13) de déplacement horizontal de l'organe porte-produit peut pivoter autour d'un axe vertical (38).

10. Ensemble selon l'une quelconque des revendications précédentes, caractérisé par un ou plusieurs postes (73) adaptés à déplacer dans un plan vertical un organe porte-produit (9) en un poste entre au moins deux directions d'acheminement et pourvus d'organes de roulement (7) propres à supporter les organes porte-produit.

11. Ensemble selon la revendication 10, caractérisé en ce que le poste (73) de déplacement de l'organe porte-produit dans un plan vertical peut pivoter autour d'un axe horizontal (75).

12. Ensemble selon la revendication 11, caractérisé en ce que ledit poste (73) de déplacement de l'organe porte-produit dans un plan vertical est pourvu d'une vis transporteuse (15) à moyens d'entraînement (19) séparés et peut tourner autour d'un axe horizontal, situé dans un plan commun avec la vis transporteuse du poste.

13. Ensemble selon la revendication 11, caractérisé en ce que le poste (73) de déplacement de l'organe porte-produit dans un plan vertical est pourvu d'une vis transporteuse (15) à moyens d'entraînement (19) séparés et peut tourner autour d'un axe (75) qui est perpendiculaire à un plan vertical passant par l'axe de transport du poste, en permettant ainsi le transfert d'organes porte-produit entre des unités transporteuses ayant une inclinaison différente-par rapport au plan horizontal.

14. Ensemble selon l'une quelconque des revendications précédentes, caractérisé en ce que les constituants de l'ensemble, y compris les unités transporteuses, les postes d'aiguillage et les postes de déplacement des organes porte-produit dans les plans verticaux et horizontaux, sont composés selon un système modulaire, selon lequel les constituants présentent des dimensions modulaires prédéterminées adaptées les unes aux autres, permettant la composition d'ensembles transporteurs de différentes dimensions et de différente configuration de réseau au moyen d'un nombre minimum de types de modules.

15. Ensemble selon la revendication 14, caractérisé en ce que les unités transporteuses présentent une longueur modulaire prédéterminée (M) dans la direction de la vis transporteuse et en ce que la distance L séparant les axes principaux des rangées de galets porteurs disposées sur chacune des poutres porteuses des unités transporteuses est égale à 3M/4.

16. Ensemble selon la revendication 15, caractérisé en ce que les organes porte-produit (9) sont munis à leur face de dessous de quatre arêtes (43, 45), servant d'organes de support pour les organes porte-produit et d'organes de prise pour les vis transporteuses (15), lesdites arêtes formant ensemble un cadre rectangulaire sensiblement ininterrompu dont le format est déterminé par le format des organes porte-produit, la distance séparant les axes principaux de deux arêtes opposées du cadre étant égale à L.

17. Ensemble selon la revendication 16, caractérisé en ce que chaque unité transporteuse est pourvue d'au moins quatre paires de galets porteurs présentant une distance mutuelle entre centres égale, qui est en même temps égale à la distance de centres entre la paire de galets située à l'une des extrémités d'une première unité transporteuse et la paire de galets adjacente d'une deuxième unité transporteuse reliée à la première unité transporteuse.

18. Ensemble selon la revendication 15, 16 ou 17, caractérisé en ce que la longueur modulaire M et la distance L sont toutes deux un multiple entier de l'étendue dans le sens longitudinal de la vis transporteuse d'une spire de filetage complète, d'une moitié de spire de filetage, etc, d'une vis transporteuse présentant une entrée de filet unique, deux entrées de filet, etc.

19. Ensemble selon l'une quelconque des revendications précédentes, caractérisé en ce qu'il comprend des organes porte-produit allongés (9a) qui sont pourvus en chaque portion terminale d'organes de prise (91) au fond de l'organe porte-produit ayant la forme d'arêtes formant des cadres dont chacun est adapté à engrener en deux positions avec une vis transporteuse sous-jacente, des moyens étant prévus pour entraîner de telle façon les vis transporteuses de deux unités transporteuses reliées l'une à l'autre angulairement, que l'organe porte-produit allongé se trouve acheminé de l'une à l'autre des extrémités des unités transporteuses.

20. Ensemble selon la revendication 19, caractérisé en ce que chacun des cadres à arêtes (91) est circulaire et de préférence fixe par rapport à l'organe porte-produit.

21. Ensemble selon la revendication 19, caractérisé en ce que chacun des cadres à arêtes est carré et est monté sur une unité transporteuse (101) qui peut pivoter par rapport à l'organe porte-produit (9b) autour d'un axe vertical (107) passant par le centre du carré.

22. Ensemble selon l'une quelconque des revendications 1 à 19, caractérisé en ce qu'il comprend des organes porte-produit (159) au fond desquels sont ménagées des arêtes (161) propres à faire prise avec les vis transporteuses, lesdites arêtes comprenant deux arêtes semi-circulaires situées chacune à l'une des extrémités de l'organe porte-produit et deux arêtes droites (165) présentant une longueur égale au rayon des arêtes semi-circulaires (161) et raccordant les extrémités de l'une des arêtes semi-circulaires aux extrémités de l'autre.

23. Ensemble selon l'une quelconque des revendications précédentes, caractérisé en ce que les flancs intérieurs des arêtes des organes porte-produit, à l'endroit en lequel eslles croisent les vis transporteuses, sont conformés de façon à présenter une portion de surface qui est adaptée à porter contre l'arête de filetage des vis transporteuses et présente globalement la même forme géométrique que la surface de l'arête de filetage contre laquelle porte ladite portion de surface.

24. Ensemble selon la revendication 23, caractérisé en ce que ladite portion de surface, vue en projection dans un plan perpendiculaire à la vis, a sensiblement les mêmes dimensions qu'un segment de la vis transporteuse, limité par une corde, formant une tangente au fond du creux de filetage.

25. Ensemble selon la revendication 24 ou 25, caractérisé en ce que lesdites portions de surface des arêtes et le flanc de filetage des vis transporteuses sont conformés en sorte que le jeu d'engrènement entre la vis et l'organe porte-produit puisse être réglé par modification de la position de hauteur mutuelle de la vis et de l'organe porte-produit.

26. Ensemble selon l'une quelconque des revendications précédentes, caractérisé en ce que les vis transporteuses (15a, 15b) des unités transporteuses et d'autres constituants sont supportées avec liberté de rotation par des organes formant palier (55, 57) de telle façon qu'aucune partie fixe des organes formant palier ne s'avance plus haut que le niveau du fond du creux de filetage à la partie supérieure de la vis transporteuse coopérant avec les organes de prise de l'organe porte-produit.

27. Ensemble selon la revendication 26, caractérisé en ce que les vis transporteuses (15a, 15b) sont supportées avec liberté de rotation dans des montures qui supportent à l'intérieur des vis une bague de roulement (59) pour des roulements à billes (57) comportant un goujon d'axe (63) solidarisé aux deux extrémités avec les portions terminales de la vis de portions de vis situées de chaque côté de l'emplacement de palier.

28. Ensemble selon l'une quelconque des revendications précédentes, caractérisé en ce que les vis transporteuses (15a, 15b) sont formées par façonnage en hélice, de préférence par déformation par laminage ou emboutissage d'un tube d'acier à paroi mince.

29. Ensemble selon l'une quelconque des revendications précédentes, caractérisé par un appareil calculateur pour la commande du fonctionnement des vis transporteuses de l'ensemble selon un programme prédéterminé pour chaque organe porte-produit et pour l'enregistrement du nombre de tours effectués par chacune des vis transporteuses prenant part à chaque transport à l'effet de permettre l'identification à tout moment de la position de l'organe porte-produit dans l'ensemble transporteur.

**Patentansprüche**

1. System für den Transport von Produktträgern mit mehreren langgestreckten Transporteinheiten, die miteinander zu einem Transportnetzwerk verbunden werden können, wobei jede der genannten Transporteinheiten einen Rahmen (2a, 2b; 4a, 4b; 5a, 5b) und eine langgestreckte Transportschnecke (15) besitzt, und mit einem Antrieb zum Drehen der Transportschnecken, deren Gewinde mit an der Unterseite eines Produktträgers (9) vorgesehenen Eingriffselementen (43, 45) derart zusammenwirken können, daß bei angetriebener Schnecke der Produktträger längs der Transporteinheit bewegt wird, dadurch gekennzeichnet, daß sich mindestens zwei Transportschnecken (15) zu einer Übergabestelle (11) erstrecken, ein Produktträger (9) mit zwei Eingriffselementen (43, 45) versehen ist, die in der Transportrichtung im Abstand voneinander angeordnet sind und beim Transport in das Gewinde je einer Transportschnecke eingreifen, und die Transportschnecken derart angeordnet sind, daß sie in einer solchen vorherbestimmten Winkelstellung angehalten werden, daß an der Übergabestelle (11) die Eingriffselemente (43, 45) in kein Gewinde einer stillstehenden Transportschnecke (15) eingreifen, aber in das Gewinde jeder sich in Bewegung setzenden Transportschnecke (15) eingreifen, so daß der Produktträger (9) von der Übergabestelle (11) mit Hilfe einer anderen als der Transportschnecke (15) wegbewegt werden kann, mit der er zu der Übergabestelle bewegt worden ist.

2. System nach Anspruch 1, dadurch gekennzeichnet, daß der Rahmen der Transporteinheiten zwei Längstragbalken (1a, 1b; 2a, 2b; usw.) besitzt, von denen jeder mit mehreren Stützrollen (7) versehen ist, die geeignet sind, die Produktträger (9) abzustützen, und sich dabei an Rippen oder Leisten (43, 45) abzuwälzen, die an der Unterseite der Produktträger vorgesehen sind, wobei die Transportschnecke zwischen den Tragbalken und parallel zu ihnen angeordnet ist.

3. System nach Anspruch 2, dadurch gekennzeichnet, daß die Rippen (43, 45) auch die genannten Eingriffselemente bilden.

4. System nach einem der vorhergehenden Ansprüche, gekennzeichnet durch eine oder mehrere Umschaltstationen (11), die geeignet sind, zwei oder mehrere Transporteinheiten miteinander zu verbinden, und so angeordnet sind, daß die Eingriffselemente eines sich in einer Umschaltstation befindenden Produktträgers sich in nächster Nähe des Gewindesteges der ersten Windung des Gewindes der Transportschnecke jeder der mit der Umschaltstation verbundenen Transporteinheiten befindet, so daß der in der Umschaltstation befindliche Produktträger von jeder der genannten Transportschnecken erfaßt werden kann, wenn sie gedreht wird, um den Produktträger längs der der rotierenden Transportschnecke entsprechenden Transporteinheit vorzuschieben.

5. System nach Anspruch 4, dadurch gekennzeichnet, daß die Umschaltstation (11) einen Rahmen (31) besitzt, dessen oberer Teil mehrere Auflager (33) umfaßt, die den Produktträger (9) in der Umschaltstation abstützen und geeignet sind, einen Transport des sich an den Stützelementen abwälzenden Produktträgers in allen Transportrichtungen zu gestatten, die durch die mit der Umschaltstation verbundenen Transporteinheiten gegeben sind.

6. System nach Anspruch 5, dadurch gekennzeichnet, daß die Auflager (33) aus Kugeln bestehen, die in kugelförmigen Pfannen drehbar gelagert sind.

7. System nach einem der Ansprüche 4 bis 6, dadurch gekennzeichnet, daß die Umschaltstation (11) quadratisch oder rechteckig und an jeder Seite des Quadrats oder Rechtecks mit einer Einrichtung zur Verbindung mit einer Transporteinheit versehen ist.

8. System nach einem der vorhergehenden Ansprüche, gekennzeichnet durch eine oder mehrere Stationen (13), die geeignet sind, einen in einer Station befindlichen Produktträger (9) horizontal zwischen mindestens zwei Transportrichtungen zu bewegen, und die mit Rollen (7) zum Abstützen der Produktträger und mit einer Transportschnecke (15) mit einem eigenen Antrieb versehen sind.

9. System nach Anspruch 8, dadurch gekennzeichnet, daß die Station (13) zum horizontalen Bewegen des Produktträgers um eine vertikale Achse (38) drehbar ist.

10. System nach einem der vorhergehenden Ansprüche, gekennzeichnet durch eine oder mehrere Stationen (73), die geeignet sind, einen in einer Station befindlichen Produktträger (9) in einer Vertikalebene zwischen mindestens zwei Transportrichtungen zu bewegen, und die mit Rollen (7) zum Abstützen der Produktträger versehen sind.

11. System nach Anspruch 10, dadurch gekennzeichnet, daß die Station (73) zum Bewegen des Produktträgers in einer Vertikalebene um eine horizontale Achse (75) drehbar ist.

12. System nach Anspruch 11, dadurch gekennzeichnet, daß die Station (73) zum Bewegen des Produktträgers in einer Vertikalebene mit einer Transportschnecke (15) mit einem eigenen Antrieb (19) versehen und um eine horizontale Achse drehbar ist, die in einer gemeinsamen Ebene mit der Transportschnecke der Station angeordnet ist.

13. System nach Anspruch 11, dadurch gekennzeichnet, daß die Station (73) zum Bewegen des Produktträgers in einer Vertikalebene mit einer Transportschnecke (15) mit einem eigenen Antrieb (19) versehen und um eine Achse (75) drehbar ist, die rechtwinklig ist zu einer die Transportachse der Station enthaltenden Vertikalebene, so daß eine Übergabe von Produktträgern zwischen Transporteinheiten möglich ist, die gegenüber der Horizontalebene unter verschiedenen Winkeln geneigt sind.

14. System nach einem der vorhergehenden Ansprüche, dadurch gekennzeichnet, daß die zu dem System gehörenden Komponenten, einschließlich der Transporteinheiten, Umschaltstationen und Stationen zum Bewegen der Produktträger in Vertikal- und Horizontalebenen, nach einem Modulsystem zusammengesetzt sind, in dem die Komponenten vorherbestimmte Modulabmessungen haben, die einander angepaßt sind, so daß mit einer minimalen Anzahl von verschiedenen Modulen Transportsysteme mit verschiedenen Abmessungen und verschiedene Netzwerkanordnungen zusammengesetzt werden können.

15. System nach Anspruch 14, dadurch gekennzeichnet, daß die Transporteinheiten in der Richtung der Transportschnecke eine vorherbestimmte Modullänge (M) haben und daß zwischen den Mittellinien der Reihen der auf jedem der Tragbalken der Transporteinheiten vorgesehenen Stützrollen der Abstand $L=\frac{3}{4}M$ vorhanden ist.

16. System nach Anspruch 15, dadurch gekennzeichnet, daß die Produktträger (9) auf der Unterseite mit vier Rippen (43, 45) versehen sind, die als Tragelemente für die Produktträger und als Eingriffselemente für die Transportschnecken (15) dienen und zusammen einen rechteckigen, im wesentlichen ununterbrochenen Rahmen bilden, dessen Größe durch die Größe der Produktträger bestimmt wird, wobei zwischen den Mittellinien von zwei einander gegenüberliegenden Rippen des Rahmens der Abstand L vorhanden ist.

17. System nach Anspruch 16, dadurch gekennzeichnet, daß jede Transporteinheit mit mindestens vier Paaren von Stützrollen versehen ist, deren Mittelabstände untereinander gleich sind und gleich sind dem Mittelabstand zwischen dem am einen Ende einer ersten Transporteinheit vorgesehenen Rollenpaar und dem benachbarten Rollenpaar einer mit der ersten Transporteinheit verbundenen, zweiten Transporteinheit.

18. System nach Anspruch 15, 16 oder 17, dadurch gekennzeichnet, daß die Modullänge M und der Abstand L ganzzahlige Vielfache der Abmessung einer vollständigen Gewindewindung, einer halben Gewindewindung, usw. einer eingängigen, zweigängigen usw. Transportschnecke in deren Längsrichtung ist.

19. System nach einem der vorhergehenden Ansprüche, dadurch gekennzeichnet, daß es langgestreckte Produktträger (9a) besitzt, die an jedem Endteil an ihrer Unterseite mit Eingriffselementen (91) in Form von Rippen versehen sind, die Rahmen bilden, von denen jeder an zwei Stellen in eine darunter angeordnete Transportschnecke eingreifen kann, wobei Mittel vorgesehen sind, mit denen die Transportschnecken von zwei im Winkel zueinander angeordneten und miteinander verbundenen Transporteinheiten derart angetrieben werden können, daß der langgestreckte Produktträger von dem einen Ende der Transporteinheiten zum andern transportiert wird.

20. System nach Anspruch 19, dadurch gekennzeichnet, daß jeder der von den Rippen gebildeten Rahmen (91) kreisförmig und vorzugsweise an dem Produktträger festgelegt ist.

21. System nach Anspruch 19, dadurch gekennzeichnet, daß jeder der von den Rippen gebildeten Rahmen quadratisch und auf einer Trägereinheit (101) montiert ist, die gegenüber dem Produktträger (9b) um eine durch den Mittelpunkt des Quadrats gehende, vertikale Achse (107) drehbar ist.

22. System nach einem der Ansprüche 1 bis 19, dadurch gekennzeichnet, daß es Produktträger (159) besitzt, die an ihrer Unterseite mit Rippen (161) zum Eingriff in die Transportschnecken versehen sind, wobei diese Rippen zwei an je einem Ende des Produktträgers angeordnete, halbkreisförmige Rippen und zwei gerade Rippen (165) umfassen, deren Länge gleich dem Radius der halbkreisförmigen Rippen (161) ist und die die Enden der einen halbkreisförmigen Rippe mit den Enden der anderen verbinden.

23. System nach einem der vorhergehenden Ansprüche, dadurch gekennzeichnet, daß an der Stelle, an der die Rippen der Produktträger die Transportschnecken kreuzen, diese Rippen mit einem Flächenteil ausgebildet sind, der zur Anlage an dem Gewindesteg der Transportschnecken geeignet ist und allgemein dieselbe geometrische Form hat wie jene Fläche des Gewindesteges, an die sich der genannte Flächenteil anlegt.

24. System nach Anspruch 23, dadurch gekennzeichnet, daß die Projektion des genannten Flächenteils auf eine zu der Schnecke rechtwinklige Ebene im wesentlichen dieselbe Größe hat wie ein Segment der Transportschnecke, das durch eine Sehne begrenzt wird, die eine Tangente an den Gewindefuß bildet.

25. System nach Anspruch 24 oder 25, dadurch gekennzeichnet, daß die genannten Flächenteile der Rippen und die Gewindeflanke der Transportschnecken so ausgebildet sind, daß das Eingriffsspiel zwischen der Schnecke und dem Produktträger durch Verändern der Höhenlage der Schnecke und des Produktträgers relativ zueinander eingestellt werden kann.

26. System nach einem der vorhergehenden Ansprüche, dadurch gekennzeichnet, daß die Transportschnecken (15a, 15b) der Transporteinheiten und andere Komponenten mit Hilfe von Lagerungen (55, 57) derart drehbar gelagert sind, daß kein ortsfester Teil der Lagerungen über das Niveau des Gewindefußes am oberen Teil der mit den Eingriffselementen des Produktträgers zusammenwirkenden Transportschnecke vorsteht.

27. System nach Anspruch 26, dadurch gekennzeichnet, daß die Transportschnecken (15a, 15b) drehbar in Halterungen gelagert sind, die im Innern der Schnecken eine Lagerhülse (59) für Rollenlager (57) abstützen, die einen Lagerzapfen (63) besitzen, der an beiden Enden mit den Enden von auf beiden Seiten der Lagerstelle angeordneten Schneckenteilen verbunden ist.

28. System nach einem der vorhergehenden Ansprüche, dadurch gekennzeichnet, daß die Transportschnecken (15a, 15b) durch Verformung, vorzugsweise durch Walzen, oder durch Tiefziehen eines dünnwandigen Rohrs unter Ausbildung einer Wendel hergestellt sind.

29. System nach einem der vorhergehenden Ansprüche, gekennzeichnet durch einen Computer zur Steuerung des Betriebes der Transportschnecken des Systems nach einem vorherbestimmten Programm für jeden Produktträger und zum Registrieren der Anzahl der vollständigen Umdrehungen, die von jeder der an

27

0 020 411

28

jedem Transport beteiligten Transportsch-
necken ausgeführt worden sind, so daß die Stellung des Produktträgers in dem System
jederzeit bestimmbar ist.

Fig. 1

Fig. 2

## Fig. 3

47

9

43 41 35 44 15

15

## Fig. 4

9

15 35

44 43 15

## Fig. 5

45

43

43

45

## Fig. 6

*1a* *7*

*15*

*1b*

## Fig. 7

*7*

*1b*

*6*

## Fig. 8

*1b* *51* *7*

*1a*

*53*

*6* *6*

## Fig. 9

*15* *59* *61*

*63*

*15a*

*15b*

*65* *57* *55*

*51*

*53*

Fig. 10

Fig. 11

Fig. 12

9a

Fig. 13

91                    91

9a

Fig. 14

9a

**Fig. 15**

**Fig. 16**

**Fig. 17**

*Fig. 18*

*Fig. 19*

*Fig. 20*

*Fig. 21*